# EUROPÄISCHE PATENTSCHRIFT

(11) **EP 4 278 231 B1**
(45) Veröffentlichungstag und Bekanntmachung des Hinweises auf die Patenterteilung: **11.03.2026**
(21) Anmeldenummer: 22700717.6
(22) Anmeldetag: 05.01.2022
(51) Int. Cl.: G02F 1/13, G02F 1/1347, B60K 35/00, B60K 35/10, B60K 35/22, B60K 35/60, B60K 35/81

(54) **ANZEIGEVORRICHTUNG UND KRAFTFAHRZEUG UMFASSEND EINE ANZEIGEVORRICHTUNG**
DISPLAY DEVICE AND MOTOR VEHICLE COMPRISING A DISPLAY DEVICE
DISPOSITIF D'AFFICHAGE ET VÉHICULE À MOTEUR COMPRENANT UN DISPOSITIF D'AFFICHAGE

(30) Priorität: 18.01.2021 DE 102021200422
(43) Veröffentlichungstag der Anmeldung: 22.11.2023
(73) Patentinhaber: VOLKSWAGEN AKTIENGESELLSCHAFT, 38440 Wolfsburg (DE)
(72) Erfinder: SCHRÖDER, Heiko, 38536 Meinersen (DE); DANOV, Roman, 30171 Hannover (DE)
(86) Internationale Anmeldenummer: PCT/EP2022/050131
(87) Internationale Veröffentlichungsnummer: WO 2022/152603

(56) Entgegenhaltungen:
- US-A1- 2013 201 228
- US-A1- 2014 283 100
- US-A1- 2020 319 512
- US-B1- 10 649 248

## Beschreibung

Die vorliegende Erfindung betrifft eine Anzeigevorrichtung umfassend eine Hinterleuchtungseinheit, ein Flüssigkristalldisplaypaneel, mindestens eine Flüssigkristalloptikeinheit und eine Steuereinheit, wobei die Flüssigkristalloptikeinheit Flüssigkristalle umfasst, welche in Abhängigkeit von angelegten elektrischen Spannungen ihre Brechungsindexverläufe ändern. Ferner betrifft die vorliegende Erfindung ein Kraftfahrzeug umfassend eine Anzeigevorrichtung.

Bei modernen Kraftfahrzeugen wird zunehmend Wert darauf gelegt, dem Fahrzeugführer und weiteren Fahrzeuginsassen eine Vielzahl visueller Informationen zur Verfügung zu stellen. Dabei ist jedoch nicht jede Information für jeden Fahrzeuginsassen gedacht. Beispielsweise kann auf einem Display einer Anzeigevorrichtung einem Beifahrer ein Video gezeigt werden. Um eine Ablenkung des Fahrzeugführers zu vermeiden, ist daher vorzugsweise dafür zu sorgen, dass dieser das Videobild nicht betrachten kann. Es besteht daher der Wunsch nach einem Privatmodus bei Anzeigevorrichtungen im Fahrzeuginnenraum.

Mittels Anzeigevorrichtungen mit Privatmodus besteht nicht nur die Möglichkeit, dem Beifahrer zur Unterhaltung beispielsweise Filme oder Videos zu zeigen. Auch bei Fahrzeugkonzepten, bei denen mehrere Personen transportiert werden, wird es möglich, den transportierten Personen Inhalte zu zeigen, welche zugleich vor der Einsichtnahme durch weitere Mitfahrer geschützt sind. Bei anderen Informationen kann es hingegen von Vorteil sein, wenn diese von allen Personen gleichzeitig gesehen werden können. Es ist daher vorteilhaft, wenn entsprechende Anzeigevorrichtungen neben einem Privatmodus auch einen öffentlichen Betrachtungsmodus aufweisen.

Aus der DE 10 2019 005 193 A1 ist ein Filter für ein Beifahrerdisplay bekannt, welcher zur Verhinderung eines seitlichen Blickes auf das Beifahrerdisplay schaltbar ausgebildet ist. Der Filter umfasst eine statische und eine schaltbare Blickschutzfolie, welche übereinander angeordnet sind, sowie jeder Blickschutzfolie zugeordnete Lichtquellen zu deren Beleuchtung.

Die DE 11 2010 004 660 T5 offenbart eine Flüssigkristalldisplayeinrichtung mit einer ersten Hinterleuchtungseinheit und einer zweiten Hinterleuchtungseinheit. Die erste Hinterleuchtungseinheit enthält ein erstes optisches Element, das Licht, das von der zweiten Hinterleuchtungseinheit auftritt, überträgt, Licht, das von einer Lichtquelle ausgegeben wird, in Licht umwandelt, das eine Schmalwinkelrichtungsverteilung aufweist und das umgewandelte Licht zur Rückfläche des Flüssigkristalldisplaypaneels abstrahlt. Die zweite Hinterleuchtungseinheit enthält ein zweites optisches Element, das Licht, das von einer Lichtquelle ausgegeben wird, in Licht umwandelt, das eine Weitwinkelrichtungsverteilung aufweist, und das umgewandelte Licht zur Rückfläche des Flüssigkristalldisplaypaneels abstrahlt.

Die US 2018/0364405 A1 offenbart ein Betrachtungswinkelsteuerelement umfassend eine biaxiale Kompensationsschicht und eine Vielzahl von Polarisatoren. Die Polarisatoren sind auf gegenüberliegenden Seiten der bi-axialen Kompensationsschicht angeordnet.

Aus der US 2017/0336661 A1 ist eine Hintergrundbeleuchtungsvorrichtung bekannt, welche einen Wellenleiter und eine Lichtquellenanordnung umfasst. Der Wellenleiter kann eine abgestufte Struktur aufweisen.

Die US 10,663,776 B1 offenbart eine Anzeigenkontrolleinheit, welche einen Betrachtungswinkel in einem Anzeigesystem steuert, wobei ein Privatmodus und ein öffentlicher Modus eingestellt werden können. Die Anzeigenkontrolleinheit umfasst eine Hintergrundbeleuchtungseinheit und eine Linsenanordnung.

Aus der US 2020/0319512 A1 ist ein Display mit lokal dimmbarer Hintergrundbeleuchtung und einem aktiven Privatsphäre-Modus bekannt. Die Anzeige kann eine Hintergrundlichtquelle, Linsen, einen passiven Diffusor, einen aktiven Diffusor und ein durchlässiges Display enthalten. Die Hintergrundlichtquelle kann eine zweidimensionale Matrix von Lichtquellen definieren, die so konfiguriert sind, dass sie ein Ausgangslicht erzeugen. Die Linsen können angrenzend an die Hintergrundlichtquelle montiert und mit den Lichtquellen ausgerichtet sein, um ein kollimiertes Licht zu erzeugen.

Die US 10,649,248 B1 offenbart ein Display mit Flüssigkristallschichten, die zwischen einer Farbfilterschicht und einer Dünnschichttransistorschicht oder einer Schicht mit organischen Leuchtdioden angeordnet sind. Das Display kann konfiguriert sein, eine Anordnung von Pixeln zu bilden und Bilder anzuzeigen. Eine Blickwinkeleinstellschicht kann die Flüssigkristallschichten überlappen.

Die US 2014/283100 A1 offenbart ein System zur Überwachung der Privatsphäre auf einem Bildschirm und insbesondere der Überwachung der Privatsphäre auf dem Bildschirm mit dynamischer Konfiguration auf der Grundlage von Dateninhalten und des Nutzungskontexts.

Die US 2013/201228 A1 offenbart Anzeigevorrichtungen, die zwischen einem Einzelansichts- und einem Mehransichtsmodus umschaltbar sind und eine Strahlformungsvorrichtung verwenden, die zwischen Strahlformungszuständen steuerbar ist, um den Einzel- und Mehransichtsmodus bereitzustellen.

Im Stand der Technik werden sogenannten Barrier- oder Lamellenfolien vor und/oder hinter einem Flüssigkristalldisplaypaneel angebracht, um den Sichtbereich einzuschränken. Derartige Folien werden beispielsweise für Monitore von Computern oder Laptops verwendet. Die Lamellenfolien absorbieren jedoch einen hohen Anteil des Lichtes, sodass die Helligkeit des Flüssigkristalldisplaypaneels reduziert wird. Zudem kann nicht zwischen verschiedenen Modi umgeschaltet werden.

Ferner ist es bekannt, Linsen oder Lentikulare vor einem Flüssigkristalldisplaypaneel anzuordnen, sodass das die Anzeige des Flüssigkristalldisplaypaneels nur in einem kleinen Winkelbereich vor dem Flüssigkristalldisplaypaneel sichtbar ist. Bei dieser Lösung ist zwar die Lichtausbeute größer, es gibt jedoch keine Umschaltoption zwischen einem privaten Modus und einem öffentlichen Modus.

Eine weitere aus dem Stand der Technik bekannte Lösung besteht in der Verwendung von zwei verschiedenen Hinterleuchtungseinheiten, welche einem großen und einem kleinen Sichtbereich zugeordnet sind. Dabei wird je nach dem Modus eine der beiden Hinterleuchtungseinheiten eingeschaltet. Die Lösung mittels zwei Hinterleuchtungseinheiten bedeutet jedoch einen deutlichen Mehraufwand, da mehrere LEDs und optische Komponenten verwendet werden müssen.

Der vorliegenden Erfindung liegt die Aufgabe zugrunde, eine Anzeigevorrichtung bereitzustellen, welche variable Betrachtungsmodi aufweist und mit einem geringen technischen Aufwand kostengünstig hergestellt werden kann.

Zur Lösung der der Erfindung zugrundeliegenden Aufgabe wird eine Anzeigevorrichtung gemäß des unabhängigen Anspruchs 1 bereitgestellt.

Die Flüssigkristalloptikeinheit umfasst Flüssigkristalle, auch "liquid crystal" oder LC genannt, welche abhängig von einem angelegten elektrischen Feld ihren Brechungsindexverlauf ändern können. Dies erfolgt, indem die Flüssigkristalle ihre Orientierung zur optischen Achse verändern, wenn die Intensität des elektrischen Feldes verändert wird. Beim Ausschalten des elektrischen Feldes orientieren sich die Flüssigkristalle in ihre ursprüngliche Position, in der Licht die Flüssigkristalloptikeinheit ohne Brechung durchdringen kann.

Das Flüssigkristalldisplaypaneel kann beispielsweise als TFT-Flüssigkristalldisplaypaneel ausgebildet sein.

Die Hinterleuchtungseinheit umfasst bevorzugt einen Wellenleiter sowie LEDs.

Erfindungsgemäß ist nun vorgesehen, dass die Steuereinheit ausgebildet ist, durch Ansteuerung der Flüssigkristalloptikeinheit eine dynamische Veränderung einer Abstrahlcharakteristik der Anzeigevorrichtung zu bewirken. Zu diesem Zweck kontrolliert die Steuereinheit die an die Flüssigkristalloptikeinheit angelegte elektrische Spannung.

Aufgrund der dynamischen Veränderung der Abstrahlcharakteristik weist die Anzeigevorrichtung mehrere Betrachtungsmodi, beispielsweise einen Privatmodus und einen öffentlichen Modus, auf. Zudem ermöglicht es die dynamische Veränderung der Abstrahlcharakteristik, die Betrachtungsmodi variabel zu gestalten oder beispielsweise Übergänge zwischen den verschiedenen Betrachtungsmodi dynamisch fließend zu gestalten.

Durch die dynamische Veränderung der Abstrahlcharakteristik kann der Sichtbereich der Anzeigevorrichtung dynamisch geändert werden, was zu einer wesentlichen Erhöhung der Flexibilität der Anzeigevorrichtung, insbesondere in automobilen Anwendungen, führt.

Gegenüber aus dem Stand der Technik bekannten Lösungen weist die erfindungsgemäße Anzeigevorrichtung zudem nur eine Hinterleuchtungseinheit und bevorzugt nur eine Flüssigkristalloptikeinheit auf. Die Herstellung ist daher technisch wesentlich weniger aufwändig und kostengünstiger als bei den aus dem Stand der Technik bekannten Vorrichtungen.

Bevorzugt ist vorgesehen, dass die mindestens eine Flüssigkristalloptikeinheit zwischen der Hinterleuchtungseinheit und dem Flüssigkristalldisplaypaneel angeordnet ist, oder dass das Flüssigkristalldisplaypaneel zwischen der Hinterleuchtungseinheit und der mindestens einen Flüssigkristalloptikeinheit angeordnet ist.

Weiter bevorzugt ist vorgesehen, dass das Flüssigkristalldisplaypaneel und/oder die Flüssigkristalloptikeinheit berührungsempfindlich ausgebildet sind.

Das Flüssigkristalldisplaypaneel und/oder die Flüssigkristalloptikeinheit können somit als Touchscreen ausgebildet sein. Dabei ist bevorzugt vorgesehen, dass das Flüssigkristalldisplaypaneel als Touchdisplay ausgebildet ist und dass die Flüssigkristalloptikeinheit zwischen der Hinterleuchtungseinheit und dem Flüssigkristalldisplaypaneel angeordnet ist.

Bevorzugt ist vorgesehen, dass die dynamische Veränderung der Abstrahlcharakteristik eine Veränderung eines Abstrahlwinkels eines durch die Flüssigkristalloptikeinheit transmittierten Lichts der Hinterleuchtungseinheit umfasst, wobei die Veränderung des Abstrahlwinkels bevorzugt eine Fokussierung oder eine Defokussierung und/oder eine Streuung des Lichts ist.

Bevorzugt ist die Hinterleuchtungseinheit ein sogenanntes "Privacy Backlight", welches einen reduzierten Abstrahlwinkel aufweist.

Beispielsweise kann die Hinterleuchtungseinheit einen Abstrahlbereich von +/- 45° in der Vertikalen und/oder +/- 15° in der Horizontalen aufweisen. Mittels der von der Steuereinheit und der Flüssigkristalloptikeinheit ermöglichten dynamischen Veränderung der Abstrahlcharakteristik kann der durch die Hinterleuchtungseinheit vorgegebene Abstrahlbereich geändert werden. So kann vorgesehen sein, dass der Abstrahlbereich der Hinterleuchtungseinheit in der Horizontalen durch die dynamische Veränderung der Abstrahlcharakteristik dynamisch auf +/- 60° erweitert werden kann. Eine derartige Veränderung der Abstrahlcharakteristik in der Horizontalen ist insbesondere in Kraftfahrzeugen vorteilhaft, um die Ablesbarkeit des Flüssigkristalldisplaypaneels von allen Passagieren zu gewährleisten.

Analog kann der Abstrahlbereich der Hinterleuchtungseinheit in der Vertikalen durch die dynamische Veränderung der Abstrahlcharakteristik dynamisch erweitert werden. Durch das gezielte Einschränken des Abstrahlbereichs der Hinterleuchtungseinheit in der Horizontalen können zum Beispiel Reflektionen in Scheiben des Kraftfahrzeugs reduziert werden.

Erfindungsgemäß ist vorgesehen, dass die dynamische Veränderung der Abstrahlcharakteristik stetig und/oder kontinuierlich in der Zeit ist.

Mit anderen Worten kann der Übergang zwischen den einzelnen Betrachtungsmodi, beispielsweise zwischen einem Privatmodus und einem öffentlichen Modus, fließend und kontinuierlich erfolgen.

Weiter ist erfindungsgemäß vorgesehen, dass die dynamische Veränderung der Abstrahlcharakteristik in verschiedenen Bereichen des Flüssigkristalldisplaypaneels unterschiedlich ausgebildet ist, wobei die Veränderung der Abstrahlcharakteristik zwischen und/oder in den verschiedenen Bereichen stetig ist.

Die Abstrahlcharakteristik ist somit nicht nur zeitlich dynamisch, sondern auch über die Abstrahlfläche des Flüssigkristalldisplaypaneels dynamisch bzw. variabel. So kann ein erster Bereich der Abstrahlfläche des Flüssigkristalldisplaypaneels eine andere Abstrahlcharakteristik aufweisen als ein zweiter Bereich. Beispielsweise kann die rechte Seite des Flüssigkristalldisplaypaneels in einen Privatmodus geschaltet sein, wohingegen die linke Seite des Flüssigkristalldisplaypaneels in einen öffentlichen Modus geschaltet ist.

Dabei ist vorgesehen, dass der Übergang der Abstrahlcharakteristik zwischen den jeweiligen Bereichen stetig beziehungsweise kontinuierlich verläuft. Mit anderen Worten verändert sich die Abstrahlcharakteristik in der Horizontalen und/oder in der Vertikalen kontinuierlich und stetig über die Abstrahlfläche des Flüssigkristalldisplaypaneels. Da die Veränderung der Abstrahlcharakteristik zudem auch in der Zeit stetig und kontinuierlich ist, kann der Betrachtungswinkel für verschiedene Beobachter aus unterschiedlichen Richtungen zu verschiedenen Zeiten unterschiedlich variiert werden. Zudem können durch die räumlich und/oder zeitlich kontinuierliche dynamische Veränderung der Abstrahlcharakteristik optische Effekte dynamisch erzeugt werden. So kann beispielsweise der Sichtbereich, also der Bereich, aus dem auf der Abstrahlfläche des Flüssigkristalldisplaypaneels ausgegebene Informationen sichtbar sind, ähnlich wie ein Suchscheinwerfer durch den Raum geschwenkt werden. Es können Linseneffekte erzeugt werden, oder es kann eine für einen Betrachter aufgrund der Betrachtungsperspektive bedingte optische Verzerrung des angezeigten Inhalts ausgeglichen werden.

Erfindungsgemäß ist vorgesehen, dass die Ansteuerung der Flüssigkristalloptikeinheit mittels einer in der Steuereinheit ausgeführten Software erfolgt.

Bevorzugt ist vorgesehen, dass die Möglichkeit von Softwareupdates der Steuereinheit bereitgestellt wird. Hierdurch wird es möglich, der Anzeigevorrichtung neue Betrachtungsmodi hinzuzufügen.

Erfindungsgemäß ist vorgesehen, dass die Flüssigkristalloptikeinheit zwei Substrate, bevorzugt aus einem Glas, aufweist, wobei zwischen den beiden Substraten die Flüssigkristalle angeordnet sind.

Weiter bevorzugt ist vorgesehen, dass lichtdurchlässige Elektroden zum Aufbau eines elektrischen Feldes auf dem Substrat angeordnet sind.

Bevorzugt ist vorgesehen, dass die Steuereinheit ausgebildet ist, die dynamische Veränderung der Abstrahlcharakteristik der Anzeigevorrichtung in Abhängigkeit einer Beobachterposition, bevorzugt in Abhängigkeit erfasster Sensordaten, und/oder in Abhängigkeit eines Anzeigeinhalts zu bewirken.

Zur Ermittlung der Beobachterposition können Sensoren, wie z.B. Kameras, vorgesehen sein, welche Sensordaten erfassen, welche die Beobachterposition betreffen.

Beispielsweise kann vorgesehen sein, dass in dem Kraftfahrzeug mittels Kameras sowie einer softwarebasierten Auswertung die Position und Ausrichtung des Kopfes eines Fahrzeuginsassen ermittelt wird, und dass die Abstrahlcharakteristik des Flüssigkristalldisplaypaneels in Abhängigkeit der Position und Ausrichtung des Kopfes des Fahrzeuginsassen dynamisch verändert wird.

Eine weitere Lösung der der Erfindung zugrundeliegenden Aufgabe besteht in einem Kraftfahrzeug umfassend eine vorbeschriebene Anzeigevorrichtung.

Die Erfindung wird nachstehend näher anhand der beigefügten Figuren erläutert. Es zeigen:
- Fig. 1: eine Anzeigevorrichtung mit einer Hinterleuchtungseinheit, einem Flüssigkristalldisplaypaneel und einer Flüssigkristalloptikeinheit,
- Fig. 2: eine Anzeigevorrichtung mit einer veränderten Abstrahlcharakteristik,
- Fig. 3: eine Flüssigkristalloptikeinheit,
- Fig. 4a: eine erste Abstrahlcharakteristik,
- Fig. 4b: eine zweite Abstrahlcharakteristik,
- Fig. 4c: eine dritte Abstrahlcharakteristik,
- Fig. 4d: eine vierte Abstrahlcharakteristik,
- Fig. 5: eine Anzeigevorrichtung mit zwei Flüssigkristalloptikeinheiten, und
- Fig. 6: eine weitere Anzeigevorrichtung.

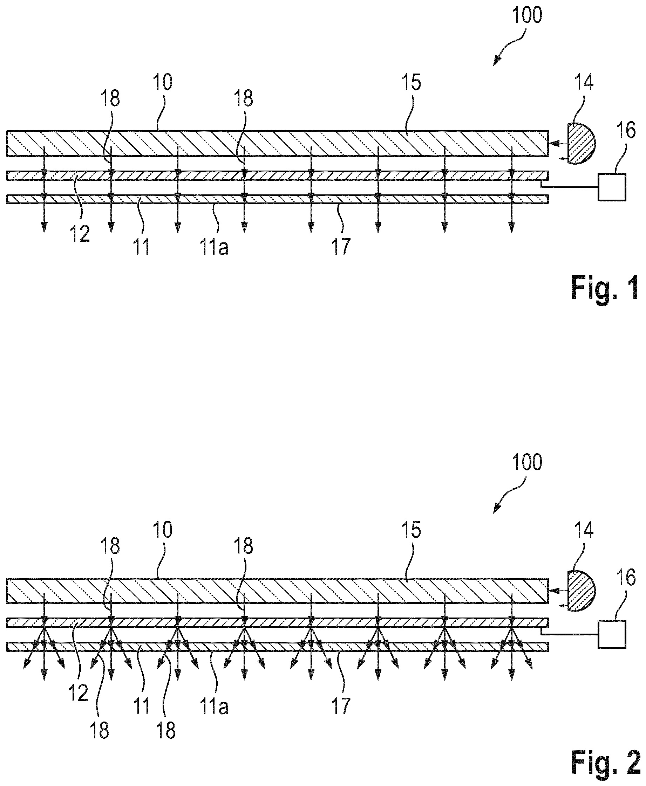

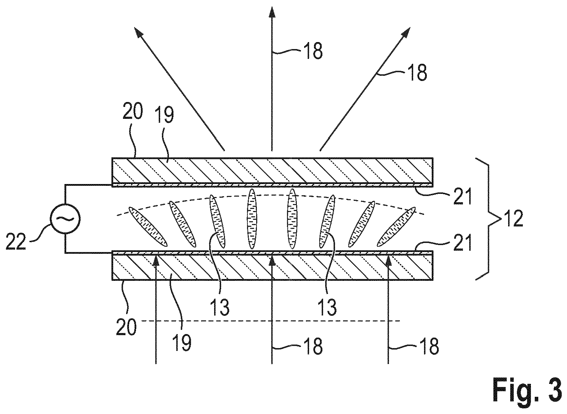

Fig. 1 zeigt eine Anzeigevorrichtung 100. Die Anzeigevorrichtung 100 umfasst eine Hinterleuchtungseinheit 10, ein Flüssigkristalldisplaypaneel 11, sowie eine zwischen der Hinterleuchtungseinheit 10 und dem Flüssigkristalldisplaypaneel 11 angeordnete Flüssigkristalloptikeinheit 12. Die Flüssigkristalloptikeinheit 12 umfasst Flüssigkristalle 13 (Fig. 3), welche in Abhängigkeit einer angelegten elektrischen Spannung ihren Brechungsindexverlauf ändern können. Die Hinterleuchtungseinheit 10 umfasst LEDs 14 sowie einen Lichtleiter 15. Von der Hinterleuchtungseinheit 10 abgestrahltes Licht 18 trifft auf die Flüssigkristalloptikeinheit 12. Je nach an die Flüssigkristalloptikeinheit 12 angelegter Spannung wird der Abstrahlwinkel des durch die Flüssigkristalloptikeinheit 12 hindurchtretenden Lichts verändert (Fig. 2). Das durch die Flüssigkristalloptikeinheit 12 transmittierte Licht 18 trifft anschließend auf das Flüssigkristalldisplaypaneel 11, welches als berührungsempfindliches TFT-Flüssigkristalldisplaypaneel 11a ausgebildet ist. Die an die Flüssigkristalloptikeinheit 12 angelegte Spannung wird durch eine Steuereinheit 16 dynamisch gesteuert, so dass die Abstrahlcharakteristik der Anzeigevorrichtung 100, d.h. der Abstrahlfläche 17 des Flüssigkristalldisplaypaneels 11 dynamisch verändert wird.

In Fig. 2 ist dargestellt, wie durch die dynamische Veränderung der Abstrahlcharakteristik der Anzeigevorrichtung 100 das von der Hinterleuchtungseinheit 10 emittierte Licht 18 gestreut wird, sodass der Betrachtungswinkel der Anzeigevorrichtung 100 vergrößert wird.

Fig. 3 zeigt eine Detailansicht der Flüssigkristalloptikeinheit 12. Die Flüssigkristalloptikeinheit 12 weist zwei als Glasscheiben 19 ausgebildete Substrate 20 auf, zwischen denen die Flüssigkristalle 13 angeordnet sind. Auf jedem der Substrate 20 sind lichtdurchlässige Elektroden 21 angeordnet, zwischen denen ein elektrisches Feld durch Anlegen einer Spannung 22 erzeugt werden kann. Die Flüssigkristalle 13 richten sich nach dem angelegten elektrischen Feld aus und bewirken im dargestellten Fall eine Streuung des durch die Flüssigkristalloptikeinheit transmittierten Lichts 18.

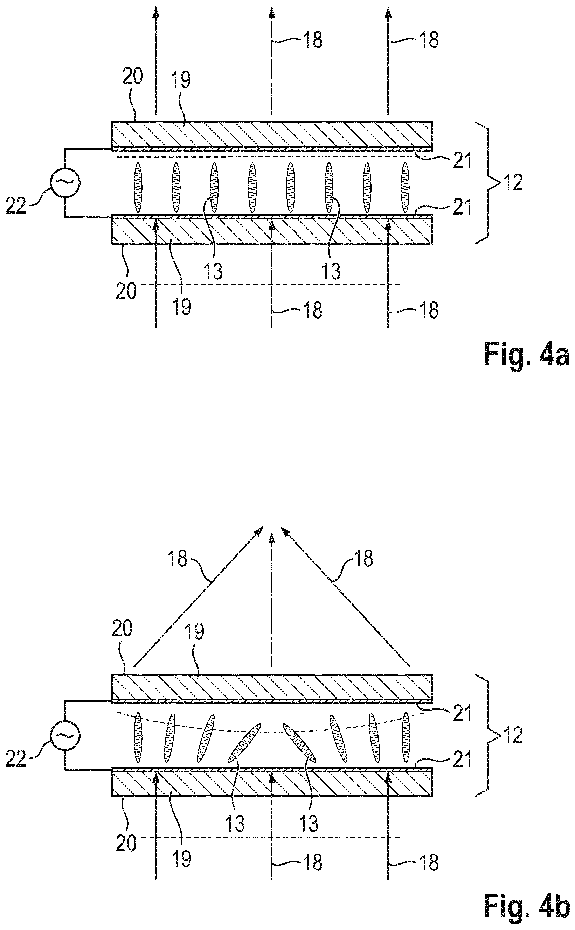

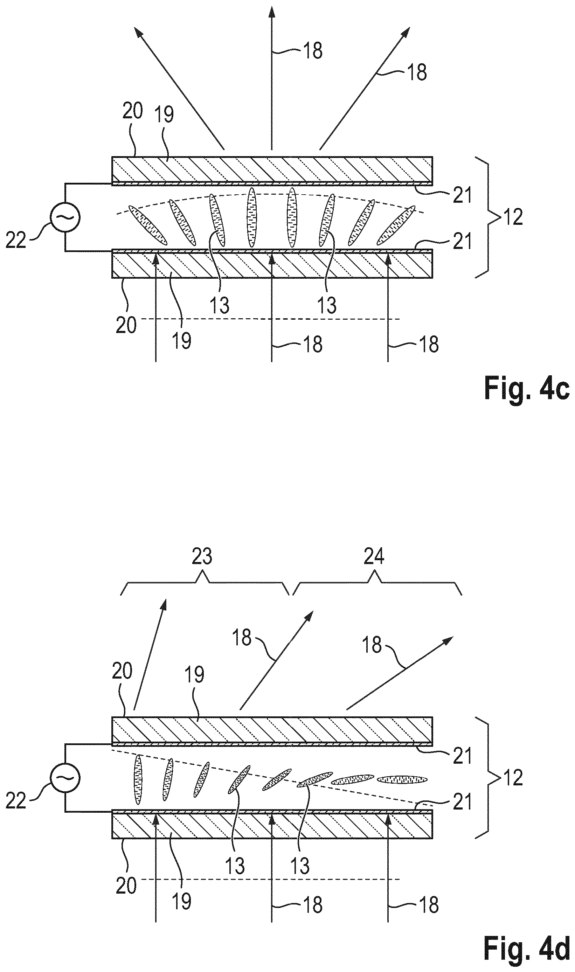

In den Fig. 4a bis 4d sind unterschiedliche mittels der Steuereinheit 16 und der Flüssigkristalloptikeinheit 12 erzielbare Veränderungen der Abstrahlcharakteristik der Anzeigevorrichtung 100 schematisch gezeigt. In einem ersten Modus nach Fig. 4a liegt keine Spannung zwischen den Elektroden 21 der Flüssigkristalloptikeinheit 12 an. Das Licht 18 tritt ohne Veränderung des Abstrahlwinkels durch die Flüssigkristalloptikeinheit 12 hindurch. In Fig. 4b wird durch Anlegen einer Spannung an die Elektroden 21 der Flüssigkristalloptikeinheit 12 eine Fokussierung des durch die Flüssigkristalloptikeinheit 12 hindurchtretenden Lichts 18 bewirkt. In Fig. 4c wird durch Anlegen einer Spannung an die Elektroden 21 der Flüssigkristalloptikeinheit 12 eine Streuung oder Defokussierung des durch die Flüssigkristalloptikeinheit 12 hindurchtretenden Lichts 18 bewirkt. Ein weiterer Anwendungsfall ist in Fig. 4d gezeigt. In diesem Fall wird durch einen geeigneten Verlauf der Spannung zwischen den Elektroden 21 bewirkt, dass die Veränderung der Abstrahlcharakteristik in einem ersten Bereich 23 anders ausfällt als in einem zweiten Bereich 24 der Anzeigevorrichtung 100 bzw. des in Fig. 4d nicht dargestellten Flüssigkristalldisplaypaneels 11. So wird in dem ersten Bereich 23 das Licht 18 nur wenig abgelenkt, wohingegen es in dem zweiten Bereich 24 stark abgelenkt wird. Den Übergang der Abstrahlcharakteristik zwischen den beiden Bereichen 23, 24 ist dabei stetig bzw. kontinuierlich. Die Abstrahlcharakteristik wird daher bereichsweise gesteuert. Die Steuereinheit 16 ist dabei ausgebildet, die Abstrahlcharakteristik der Anzeigevorrichtung 100 in der Zeit stetig bzw. kontinuierlich zwischen den in den Fig. 4a bis 4d gezeigten Fällen dynamisch zu variieren.

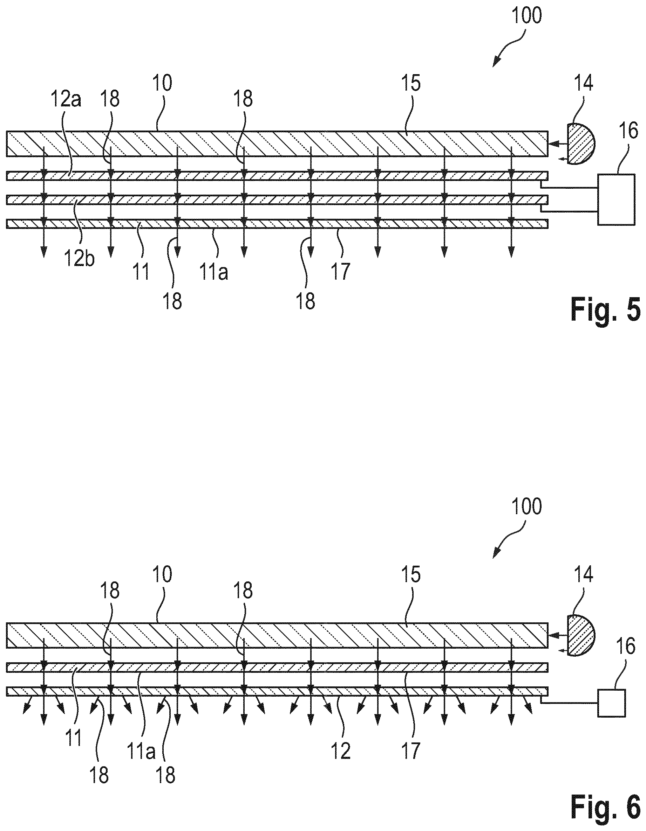

Fig. 5 zeigt eine weitere Anzeigevorrichtung 100. Die Anzeigevorrichtung 100 der Fig. 5 unterscheidet sich von der nach Fig. 1 im Wesentlichen darin, dass zwei Flüssigkristalloptikeinheiten 12a, 12b vorgesehen sind. Die erste Flüssigkristalloptikeinheit 12a dient der Steuerung der vertikalen Abstrahlcharakteristik, während die zweite Flüssigkristalloptikeinheit 12b der Steuerung der horizontalen Abstrahlcharakteristik entspricht.

Fig. 6 zeigt eine weitere Variante der Anzeigevorrichtung 100. Bei der Anzeigevorrichtung der Fig. 6 sind die Reihenfolge von Flüssigkristalloptikeinheit 12 und Flüssigkristalldisplaypaneel 11 vertauscht, sodass das Flüssigkristalldisplaypaneel 11 zwischen der Flüssigkristalloptikeinheit 12 und der Hinterleuchtungseinheit 10 angeordnet ist.

### Bezugszeichenliste

- 100: Anzeigevorrichtung
- 10: Hinterleuchtungseinheit
- 11: Flüssigkristalldisplaypaneel
- 12: Flüssigkristalloptikeinheit
- 12a: Flüssigkristalloptikeinheit
- 12b: Flüssigkristalloptikeinheit
- 13: Flüssigkristall
- 14: LED
- 15: Lichtleiter
- 16: Steuereinheit
- 17: Abstrahlfläche
- 18: Licht
- 19: Glasscheibe
- 20: Substrat
- 21: Elektrode
- 22: Spannung
- 23: Erster Bereich
- 24: Zweiter Bereich

## Patentansprüche

1. Anzeigevorrichtung (100) umfassend eine Hinterleuchtungseinheit (10), ein Flüssigkristalldisplaypaneel (11), mindestens eine Flüssigkristalloptikeinheit (12, 12a, 12b) und eine Steuereinheit (16), wobei die Flüssigkristalloptikeinheit (12, 12a, 12b) zwei Substrate (20) umfasst, wobei zwischen den beiden Substraten (20) Flüssigkristalle (13) angeordnet sind, welche in Abhängigkeit von einem angelegten elektrischen Feld ihren Brechungsindexverlauf entlang den beiden Substraten (20) ändern, wobei die Steuereinheit (16) ausgebildet ist, durch Ansteuerung der Flüssigkristalloptikeinheit (12, 12a, 12b) eine dynamische, das bedeutet eine zeitliche und räumliche, Veränderung der Abstrahlcharakteristik der Anzeigevorrichtung (100) zu bewirken, wobei die Ansteuerung der Flüssigkristalloptikeinheit (12, 12a, 12b) mittels einer in der Steuereinheit (16) ausgeführten Software erfolgt, wobei die Änderung der Abstrahlcharakteristik in verschiedenen Bereichen (23, 24) der Anzeigevorrichtung (100) durch einen geeigneten Verlauf des elektrischen Feldes über entsprechende Bereiche des Flüssigkristalldisplaypaneels (11) unterschiedlich ausgebildet werden kann, **dadurch gekennzeichnet, dass** die Veränderung der Abstrahlcharakteristik zwischen und in den verschiedenen Bereichen (23, 24) stetig ist, sodass der Übergang der Abstrahlcharakteristik zwischen den jeweiligen Bereichen (23, 24) kontinuierlich verläuft und sodass die Abstrahlcharakteristik in einer Horizontalen und in einer Vertikalen stetig über die Abstrahlfläche (17) des Flüssigkristalldisplaypaneels (11) verändert werden kann, und dass die dynamische, das bedeutet zeitliche und räumliche, Veränderung der Abstrahlcharakteristik stetig in der Zeit ist, sodass ein Betrachtungswinkel für verschiedene Beobachter aus unterschiedlichen Richtungen zu verschiedenen Zeiten unterschiedlich variiert werden kann.

2. Anzeigevorrichtung (100) nach Anspruch 1, **dadurch gekennzeichnet, dass** die mindestens eine Flüssigkristalloptikeinheit (12, 12a, 12b) zwischen der Hinterleuchtungseinheit (10) und dem Flüssigkristalldisplaypaneel (11) angeordnet ist, oder dass das Flüssigkristalldisplaypaneel (11) zwischen der Hinterleuchtungseinheit (10) und der mindestens einen Flüssigkristalloptikeinheit (12, 12a, 12b) angeordnet ist.

3. Anzeigevorrichtung (100) nach Anspruch 1 oder 2, **dadurch gekennzeichnet, dass** das Flüssigkristalldisplaypaneel (11) und/oder die Flüssigkristalloptikeinheit (12, 12a, 12b) berührungsempfindlich ausgebildet ist.

4. Anzeigevorrichtung (100) nach einem der vorgenannten Ansprüche, **dadurch gekennzeichnet, dass** mehrere Flüssigkristalloptikeinheiten (12, 12a, 12b) vorgesehen sind.

5. Anzeigevorrichtung (100) nach einem der vorgenannten Ansprüche, **dadurch gekennzeichnet, dass** die dynamische Veränderung der Abstrahlcharakteristik eine Veränderung eines Abstrahlwinkels eines durch die Flüssigkristalloptikeinheit (12, 12a, 12b) transmittierten Lichts (18) der Hinterleuchtungseinheit (10) umfasst, wobei die Veränderung des Abstrahlwinkels bevorzugt eine Fokussierung oder eine Defokussierung und/oder eine Streuung des Lichts (18) ist.

6. Anzeigevorrichtung (100) nach einem der vorgenannten Ansprüche, **dadurch gekennzeichnet, dass** die Steuereinheit (16) ausgebildet ist, die dynamische Veränderung einer Abstrahlcharakteristik der Anzeigevorrichtung (100) in Abhängigkeit einer Beobachterposition, bevorzugt in Abhängigkeit erfasster Sensordaten und/oder in Abhängigkeit eines Anzeigeinhalts zu bewirken.

7. Kraftfahrzeug, umfassend eine Anzeigevorrichtung (100) nach einem der Ansprüche 1 bis 6.

## Claims

1. Display device (100) comprising a backlighting unit (10), a liquid crystal display panel (11), at least one liquid crystal optics unit (12, 12a, 12b) and a control unit (16), the liquid crystal optics unit (12, 12a, 12b) comprising two substrates (20), liquid crystals (13) being arranged between the two substrates (20), which crystals change their refractive index profile along the two substrates (20) depending on an applied electric field, the control unit (16) being configured to cause a dynamic, i.e., temporal and spatial, change in the emission characteristic of the display device (100) by controlling the liquid crystal optics unit (12, 12a, 12b), the liquid crystal optics unit (12, 12a, 12b) being controlled by means of software executed in the control unit (16), it being possible to configure the change in the emission characteristic in various regions (23, 24) of the display device (100) differently by means of a suitable progression of the electric field over corresponding regions of the liquid crystal display panel (11), **characterized in that** the change in the emission characteristic between and in the various regions (23, 24) is continuous, such that the transition of the emission characteristic between the relevant regions (23, 24) is continuous and such that the emission characteristic in a horizontal plane and in a vertical plane can be continuously changed across the emitting surface (17) of the liquid crystal display panel (11), **and in that** the dynamic, i.e., temporal and spatial, change in the emission characteristic is continuous over time, such that a viewing angle can be varied differently for various observers from different directions at various times.

2. Display device (100) according to claim 1, **characterized in that** the at least one liquid crystal optics unit (12, 12a, 12b) is arranged between the backlighting unit (10) and the liquid crystal display panel (11), **or in that** the liquid crystal display panel (11) is arranged between the backlighting unit (10) and the at least one liquid crystal optics unit (12, 12a, 12b).

3. Display device (100) according to claim 1 or 2, **characterized in that** the liquid crystal display panel (11) and/or the liquid crystal optics unit (12, 12a, 12b) is configured to be touch sensitive.

4. Display device (100) according to any of the preceding claims, **characterized in that** a plurality of liquid crystal optics units (12, 12a, 12b) are provided.

5. Display device (100) according to any of the preceding claims, **characterized in that** the dynamic change in the emission characteristic comprises a change in the emission angle of a light (18) of the backlighting unit (10) transmitted through the liquid crystal optics unit (12, 12a, 12b), the change in the emission angle preferably being focusing or defocusing and/or scattering of the light (18).

6. Display device (100) according to any of the preceding claims, **characterized in that** the control unit (16) is configured to cause the dynamic change of an emission characteristic of the display device (100) depending on an observer position, preferably depending on captured sensor data and/or depending on a display content.

7. Motor vehicle comprising a display device (100) according to any of claims 1 to 6.

## Revendications

1. Dispositif d'affichage (100) comprenant une unité de rétroéclairage (10), un panneau d'affichage à cristaux liquides (11), au moins une unité optique à cristaux liquides (12, 12a, 12b) et une unité de commande (16), dans lequel l'unité optique à cristaux liquides (12, 12a, 12b) comprend deux substrats (20), dans lequel des cristaux liquides (13) sont disposés entre les deux substrats (20), lesquels modifient leur tracé d'indice de réfraction le long des deux substrats (20) en fonction d'un champ électrique appliqué, dans lequel l'unité de commande (16) est configurée pour provoquer, par une commande de l'unité optique à cristaux liquides (12, 12a, 12b), une modification dynamique, c'est-à-dire temporelle et spatiale, de la caractéristique de rayonnement du dispositif d'affichage (100), dans lequel la commande de l'unité optique à cristaux liquides (12, 12a, 12b) est effectuée au moyen d'un logiciel exécuté dans l'unité de commande (16), dans lequel la modification de la caractéristique de rayonnement dans différentes zones (23, 24) du dispositif d'affichage (100) peut être configurée différemment par un tracé approprié du champ électrique sur des zones correspondantes du panneau d'affichage à cristaux liquides (11), **caractérisé en ce que** la modification de la caractéristique de rayonnement entre les différentes zones (23, 24) et dans celles-ci est continue de sorte que la transition de la caractéristique de rayonnement entre les zones (23, 24) respectives se déroule de manière continue et de sorte que la caractéristique de rayonnement peut être modifiée en permanence dans une direction horizontale et dans une direction verticale sur la surface de rayonnement (17) du panneau d'affichage à cristaux liquides (11), **et en ce que** la modification dynamique, c'est-à-dire temporelle et spatiale, de la caractéristique de rayonnement est continue dans le temps de sorte qu'un angle d'observation peut être varié différemment pour différents observateurs dans différentes directions à différents moments.

2. Dispositif d'affichage (100) selon la revendication 1,
**caractérisé en ce que** l'au moins une unité optique à cristaux liquides (12, 12a, 12b) est disposée entre l'unité de rétroéclairage (10) et le panneau d'affichage à cristaux liquides (11), **ou en ce que** le panneau d'affichage à cristaux liquides (11) est disposé entre l'unité de rétroéclairage (10) et l'au moins une unité optique à cristaux liquides (12, 12a, 12b).

3. Dispositif d'affichage (100) selon la revendication 1 ou 2,
**caractérisé en ce que** le panneau d'affichage à cristaux liquides (11) et/ou l'unité optique à cristaux liquides (12, 12a, 12b) sont configurés pour être sensibles au toucher.

4. Dispositif d'affichage (100) selon l'une des revendications précédentes, **caractérisé en ce que** plusieurs unités optiques à cristaux liquides (12, 12a, 12b) sont prévues.

5. Dispositif d'affichage (100) selon l'une des revendications précédentes, **caractérisé en ce que** la modification dynamique de la caractéristique de rayonnement comprend une modification d'un angle de rayonnement d'une lumière (18) de l'unité de rétroéclairage (10) transmise par l'unité optique à cristaux liquides (12, 12a, 12b), dans lequel la modification de l'angle de rayonnement est de préférence une focalisation ou une défocalisation et/ou une diffusion de la lumière (18).

6. Dispositif d'affichage (100) selon l'une des revendications précédentes, **caractérisé en ce que** l'unité de commande (16) est configurée pour provoquer la modification dynamique d'une caractéristique de rayonnement du dispositif d'affichage (100) en fonction d'une position d'observateur, de préférence en fonction de données de capteur détectées et/ou en fonction d'un contenu d'affichage.

7. Véhicule automobile, comprenant un dispositif d'affichage (100) selon l'une des revendications 1 à 6.
